# EUROPEAN PATENT APPLICATION

(11) **EP 4 797 151 A1**
(43) Date of publication of application: **26.08.2026**
(21) Application number: 25809631.2
(22) Date of filing: 09.05.2025
(51) Int. Cl.: G06K 19/077

(54) **SMART CARD**

(30) Priority: 10.05.2024 CN 202421005814 U
(71) Applicant: Giesecke+Devrient ePayments GmbH, 81677 München (DE)
(72) Inventor: YU, Minjie, Beijing 100022 (CN); ZENG, Teng, Beijing 100022 (CN); CHEN, Wulin, Beijing 100022 (CN)
(74) Representative: Giesecke+Devrient IP
(86) International application number: PCT/CN2025/093720
(87) International publication number: WO 2025/232870

(57) **Abstract**

Disclosed in the present application is a smart card. The smart card comprises: a first hard substrate, which comprises a first surface and a second surface opposite each other, the first surface being provided with first open grooves; a second hard substrate, which is arranged on one side of the second surface of the first hard substrate, wherein the second surface, or the surface of the side of the second hard substrate that faces towards the first hard substrate is provided with a second open groove, and when the second open groove is arranged in the second surface, the first open grooves and the second open groove do not overlap in the thickness direction of the smart card; an information carrier portion, which is arranged in the first open grooves; and an antenna element, which is arranged in the second open groove. The smart card provided in the embodiments uses the first hard substrate and the second hard substrate, and thus has higher material hardness and structural strength and is not prone to deforming, thereby improving the usage performance of the smart card.

## Description

### Technical field

The present application relates to the technical field of smart cards, and in particular to a smart card.

### Background art

Smart cards typically refer to cards with an embedded chip module. Smart cards include standard cards, which have specific dimensions and are made of a plastic material. The smart cards are media for identifying individuals and storing their information. Various smart cards, such as work ID cards, identity cards, financial transaction cards, and membership cards, have been widely applied in people's daily lives.

Due to limitations in the structural materials of existing smart cards, the performance of the existing smart cards cannot meet the requirements.

### Summary

Embodiments of the present application provides a smart card. The smart card provided in the embodiments employs a first rigid substrate and a second rigid substrate, and thus has a higher material hardness and structural strength and is less prone to deformation, thereby improving the performance of the smart card.

The embodiments of the present application provide a smart card, including: a first rigid substrate, which includes a first surface and a second surface opposite each other, the first surface being provided with a first slot; a second rigid substrate, which is disposed on a side of the second surface of the first rigid substrate, where the second surface, or a surface of the second rigid substrate that faces the first rigid substrate is provided with a second slot, and when the second slot is disposed in the second surface, the first slot and the second slot do not overlap in a thickness direction of the smart card; an information carrier portion, which is disposed in the first slot; and an antenna unit, which is disposed in the second slot.

According to an embodiment provided by the present application, the smart card further includes a chip, where the chip is electrically connected to the antenna unit and at least partially disposed in the second slot.

According to an embodiment provided by the present application, the second rigid substrate further includes a third slot penetrating the second rigid substrate; and the smart card further includes a chip module at least partially disposed in the third slot, the chip module being electrically connected to the antenna unit.

According to an embodiment provided by the present application, the second surface is further provided with a fourth slot, the fourth slot being in communication with the third slot to receive part of the chip module.

According to an embodiment provided by the present application, the chip module includes a carrier-strip and a chip connected to each other, and an encapsulant disposed on a side of the chip facing away from the carrier-strip; and the carrier-strip and the chip are at least partially disposed in the third slot, and the encapsulant is disposed in the fourth slot.

According to an embodiment provided by the present application, a depth of the third slot is greater than a thickness of the carrier-strip in the thickness direction of the smart card.

According to an embodiment provided by the present application, the smart card further includes an adhesive layer disposed between the first rigid substrate and the second rigid substrate to bond the first rigid substrate and the second rigid substrate.

According to an embodiment provided by the present application, the information carrier portion includes at least one of a magnetic stripe, an anti-counterfeiting mark, and a signature strip.

According to an embodiment provided by the present application, the first surface is provided with at least two first slots spaced apart from each other, at least two of the magnetic stripe, the anti-counterfeiting mark and the signature strip being respectively disposed in different ones of the first slots.

According to an embodiment provided by the present application, an orthographic projection pattern of the antenna unit on the first rigid substrate matches an orthographic projection pattern of the second slot on the first rigid substrate.

According to an embodiment provided by the present application, the antenna unit includes a first annular portion, and a second annular portion connected to an outer peripheral side of the first annular portion, the second annular portion being electrically connected to the chip module; or the antenna unit includes a first annular portion, and a second annular portion connected to an inner peripheral side of the first annular portion, the second annular portion being electrically connected to the chip module.

According to an embodiment provided by the present application, the antenna unit includes a flexible antenna.

According to an embodiment provided by the present application, the smart card further includes a pattern layer disposed on the first surface and/or on a surface of the second rigid substrate that faces away from the first rigid substrate, the pattern layer being formed by one of screen printing, electroplating, color firing, and photolithography.

According to an embodiment provided by the present application, the smart card further includes an anti-fingerprint layer disposed on a side of the first surface and/or on a side of a surface of the second rigid substrate that faces away from the first rigid substrate.

According to an embodiment provided by the present application, the first rigid substrate and the second rigid substrate include a rigid material, which is ceramic or stone.

According to an embodiment provided by the present application, the rigid material is a sapphire material. The smart card provided in the embodiments of the present application includes a first rigid substrate, a second rigid substrate, an antenna unit and an information carrier portion, in which a first surface of the first rigid substrate is provided with a first slot, and a second surface, or a surface of the second rigid substrate that faces the first rigid substrate is provided with a second slot, to receive the information carrier portion and the antenna unit. When the second slot is disposed in the second surface, the first slot and the second slot do not overlap in a thickness direction of the smart card, to avoid cracking of the first rigid substrate in a weak region due to stress relief when preparing the first slot and the second slot in the first rigid substrate, i.e., to ensure that the thickness of the first rigid substrate meets the requirements, and the structural strength thereof is increased. The smart card provided in the embodiments employs the first rigid substrate and the second rigid substrate, and thus has a higher material hardness and structural strength and is less prone to deformation, thereby improving the performance of the smart card.

### Brief description of the drawings

In order to describe the technical solutions in the embodiments of the present application more clearly, the drawings required for illustration of the embodiments of the present application will be briefly introduced below. Apparently, the drawings as described below are only for some of the embodiments of the present application, and for those of ordinary skill in the art, other drawings can also be obtained from these drawings without any creative effort.
Fig. 1 is a schematic structural diagram of a smart card according to an embodiment of the present application;
Fig. 2 is a schematic cross-sectional view taken along line A-A in Fig. 1 according to an embodiment of the present application;
Fig. 3 is a schematic cross-sectional view taken along line A-A in Fig. 1 according to another embodiment of the present application;
Fig. 4 is a top view of a first rigid substrate according to an embodiment of the present application;
Fig. 5 is a schematic structural diagram of a chip module and an antenna unit according to an embodiment of the present application; and
Fig. 6 is a schematic structural diagram of a chip module and an antenna unit according to another embodiment of the present application.

### List of reference signs:

1. first rigid substrate;
2. second rigid substrate;
3. chip module;
4. antenna unit;
5. information carrier portion; 51. magnetic stripe; 52. signature strip; 53. anti-counterfeiting mark;
6. adhesive layer;
7. pattern layer;
H1. first annular portion; H2. second annular portion; F1. first surface; F2. second surface; K1. first slot; K2. second slot; K3. third slot; K4. fourth slot.

### Detailed Description of Embodiments

The features and exemplary embodiments of the present application in various aspects are described in detail below. In the following detailed description, many specific details are set forth to comprehensively understand the present application. However, it will be very apparent to those skilled in the art that the present application may be implemented without some of these specific details. The following description of the embodiments are merely to provide a better understanding for the present application by illustrating examples of the present application.

It should be noted that the embodiments in the present application and the features in the embodiments can be combined with each other without conflict. The embodiments are described in detail below with reference to the accompanying drawings.

Relationship terms such as first and second are merely used to distinguish an entity or operation from another entity or operation, and do not necessarily require or imply that any such actual relationship or order exists between those entities or operations. Moreover, the terms "include", "comprise", or any other variations thereof are intended to cover non-exclusive inclusion, so that a process, method, article, or device that includes a series of elements not only includes those elements but also includes other elements not specifically listed, or elements inherent to such a process, method, article, or device. If no more limitations are made, an element limited by "including..." does not exclude other identical elements existing in the process, the method, the article, or the device which includes the element.

It should be understood that in the description of the structure of a component, a layer or region referred as being located "above" or "over" another layer or region may be directly on the other layer or region, or there may be other layers or regions between the layer or region and the other layer or region. Moreover, if the component is turned over, the layer or region is located "below" or "under" the other layer or region.

In addition, the term "and/or" herein is merely an association relation describing associated objects, which means that there may be three relations, for example, A and/or B may represent three situations: A exists alone, both A and B exist, and B exists alone. In addition, the character "/" herein generally indicates that an "or" relationship between associated objects.

It should be understood that in the embodiments of the present application; "B corresponding to A" means that B is associated with A, and B can be determined based on A. It should also be understood that determining B based on A does not mean determining B based solely on A; and B may also be determined based on A and/or other information.

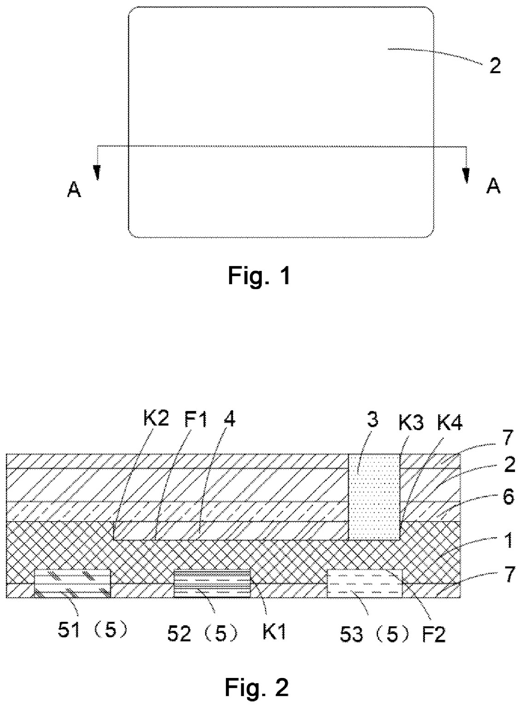

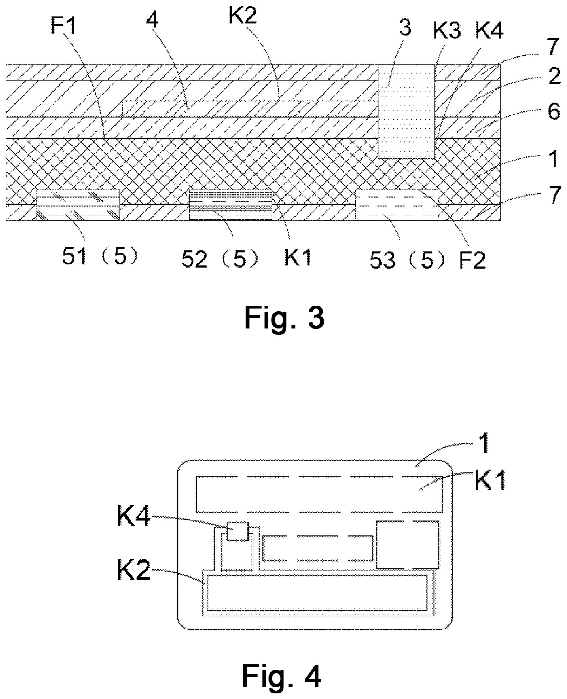

With reference to Figs. 1 to 3, Fig. 1 is a schematic structural diagram of a smart card according to an embodiment of the present application; Fig. 2 is a schematic cross-sectional view taken along line A-A in Fig. 1 according to an embodiment of the present application; and Fig. 3 is a schematic cross-sectional view taken along line A-A in Fig. 1 according to another embodiment of the present application.

The embodiments of the present application provide a smart card, including: a first rigid substrate 1, which first rigid substrate 1 includes a first surface F1 and a second surface F2 opposite each other, the first surface F1 being provided with a first slot K1; a second rigid substrate 2, which is disposed on a side of the second surface F2 of the first rigid substrate 1, where the second surface F2, or a surface of the second rigid substrate 2 that faces the first rigid substrate 1 is provided with a second slot K2, and when the second slot K2 is disposed in the second surface F2, the first slot K1 and the second slot K2 do not overlap in a thickness direction of the smart card; an information carrier portion 5, which is disposed in the first slot K1; and an antenna unit 4, which is disposed in the second slot K2.

The smart card provided in the embodiments of the present application includes a first rigid substrate 1, a second rigid substrate 2, an antenna unit 4 and an information carrier portion 5, in which a first surface F1 of the first rigid substrate 1 is provided with a first slot K1, and a second surface F2, or a surface of the second rigid substrate 2 that faces the first rigid substrate 1 is provided with a second slot K2, to receive the information carrier portion 5 and the antenna unit 4. When the second slot K2 is disposed in the second surface F2, the first slot K1 and the second slot K2 do not overlap in a thickness direction of the smart card, to avoid cracking of the first rigid substrate 1 in a weak region due to stress relief when preparing the first slot K1 and the second slot K2 in the first rigid substrate 1, i.e., to ensure that the thickness of the first rigid substrate 1 meets the requirements, and the structural strength thereof is increased. The smart card provided in the embodiments employs the first rigid substrate 1 and the second rigid substrate 2, and thus has a higher material hardness and structural strength and is less prone to deformation, thereby improving the performance of the smart card.

In this embodiment, the first slot K1 and the second slot K2 may be formed by a milling process, CNC engraving, a laser etching process, and other means.

Optionally, both the first rigid substrate 1 and the second rigid substrate 2 include a rigid material, which is ceramic or stone. That is, both the first rigid substrate 1 and the second rigid substrate 2 may be made of ceramic or stone, to ensure the hardness and the structural strength of the smart card.

Optionally, the rigid material is a sapphire material.

In some optional embodiments, when the smart card is a contactless card, the smart card further includes a chip. The chip is electrically connected to the antenna unit 4 and at least partially disposed in the second slot K2.

The chip is powered by the antenna unit 4. The chip and the antenna unit 4 may be disposed in the second slot K2.

Optionally, the antenna unit 4 includes a coil.

Optionally, the antenna unit 4 is arranged in an annular configuration, and may specifically be arranged in a square or circular configuration.

Optionally, When the chip approaches a magnetic field of a card reader, the induced current produced by the coil must be capable of supplying power for contactless communication. The larger the area encircled by the coil, the greater the induced current generated by the coil.

When the smart card is a dual-interface card, the second rigid substrate 2 further includes a third slot K3 penetrating the second rigid substrate 2; and the smart card further includes a chip module 3. The chip module 3 is at least partially disposed in the third slot K3, and the chip module 3 is electrically connected to the antenna unit 4.

The chip module 3 includes a chip and a carrier-strip. A contact pad is provided on a front side of the carrier-strip for supplying power to the chip during contact payment, and a contact is further provided on a back side of the carrier-strip, and is connected to the coil of the antenna unit 4 such that the chip is supplied with power by the coil during non-contact payment.

Optionally, the carrier-strip includes a carrier and a strip. The strip and the chip are electrically connected via lead wires. The carrier is configured to carry the strip, and to connect to and fix a component of the chip, while the strip functions as an interface, and may adopt a copper-based structure, with a contact surface electroplated with nickel and gold, thereby preventing rust or damage while ensuring effective signal transmission.

Optionally, the carrier-strip is provided with a chip carrying region and a plurality of functional regions which are isolated from each other. The functional regions are sequentially defined as an input/output functional region, a clock functional region, a power supply functional region, a ground functional region, a reset functional region, and a reserved functional region.

Optionally, an orthographic projection pattern of the antenna unit 4 on the first rigid substrate 1 matches an orthographic projection pattern of the second slot K2 on the first rigid substrate 1. In particular, the antenna unit 4 and the second slot K2 may be of the same shape such that the second slot K2 exactly receives the antenna unit 4, and the size of the second slot K2 may be slightly larger than that of the antenna unit 4, to facilitate the arrangement of the antenna unit 4.

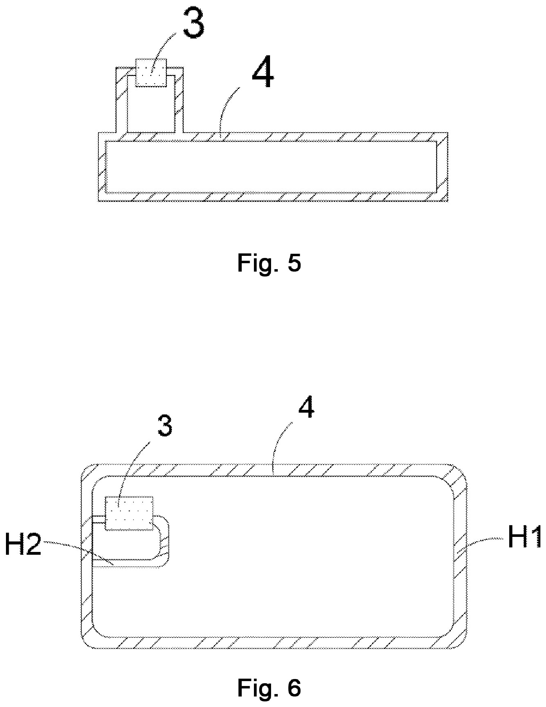

Optionally, the antenna unit 4 includes a first annular portion H1, and a second annular portion H2 connected to an outer peripheral side of the first annular portion H1, the second annular portion H2 being electrically connected to the chip module 3, as shown in Figs. 4 and 5. Alternatively, the antenna unit 4 includes a first annular portion H1, and a second annular portion H2 connected to an inner peripheral side of the first annular portion H1, the second annular portion H2 being electrically connected to the chip module 3, as shown in Fig. 6.

In this embodiment, both the first annular portion H1 and the second annular portion H2 may adopt a structure similar to a rectangular ring, so as to facilitate preparation. Moreover, the size of the second annular portion H2 may be less than that of the first annular portion H1 to facilitate the electrical connection of the second annular portion H2 to the chip module 3.

Referring to Figs. 4 to 5, in some optional embodiments, the second surface F2 is further provided with a fourth slot K4. The fourth slot K4 is in communication with the third slot K3 to receive part of the chip module 3.

Considering that the chip module 3 needs to be connected to the antenna unit 4, a fourth slot K4 needs to be provided in the first rigid substrate 1, such that the chip module 3 can extend at least partially to the first rigid substrate 1 for connection to the antenna unit 4 located in the second slot K2. The specific shape and size of the fourth slot K4 need to be set according to the specific shape and size of the chip module 3, and the size of the fourth slot may be slightly larger than that of the chip module 3, so as to facilitate the arrangement.

The chip module 3 provided in the embodiments of the present application may be configured in a conventional shape such as a square, or in a circular shape, an obround shape, an irregular shape, or the like, or in any other non-standard shape.

In some optional embodiments, the chip module 3 includes a carrier-strip and a chip connected to each other, and an encapsulant disposed on a side of the chip facing away from the carrier-strip; and the carrier-strip and the chip are at least partially disposed in the third slot K3, and the encapsulant is disposed in the fourth slot K4.

In this embodiment, the carrier-strip may be completely disposed in the third slot K3 such that the carrier-strip is exposed for ease of use, while the chip is located on a side of the carrier-strip facing the first rigid substrate 1, thereby facilitating the arrangement and preventing damage to the chip. The chip can be protected by providing the encapsulant, serving as a protective barrier to provide moisture isolation and prevent physical or chemical damage and other problems caused by thermal shock, corrosion, bending, vibration and fatigue.

In some optional embodiments, a depth of the third slot K3 is greater than a thickness of the carrier-strip in the thickness direction of the smart card.

It can be understood that due to the exposure arrangement of the carrier-strip, it is necessary to limit the depth of the third slot K3 to be greater than the thickness of the carrier-strip, such that an upper surface of the carrier-strip cannot protrude relative to the second rigid substrate 2, so as to prevent damage to the carrier-strip.

In the same way, in order to effectively receive the antenna unit 4 and the information carrier portion 5, optionally, a depth of the second slot K2 is greater than or equal to the thickness of the antenna unit 4 in the thickness direction of the smart card; and/or a depth of the first slot K1 is greater than or equal to a thickness of the information carrier portion 5 in the thickness direction of the smart card.

Referring to Fig. 2, in some optional embodiments, the smart card further includes an adhesive layer 6. The adhesive layer 6 is disposed between the first rigid substrate 1 and the second rigid substrate 2 to bond the first rigid substrate 1 and the second rigid substrate 2.

In this embodiment, the adhesive layer 6 can be used to adhesively fix the first rigid substrate 1 and the second rigid substrate 2 by virtue of its adhesiveness. Optionally, the adhesive layer 6 may be made of a thermosetting adhesive layer 6 or other adhesive materials.

Optionally, the information carrier portion 5 includes at least one of a magnetic stripe 51, an anti-counterfeiting mark 53, and a signature strip 52. The specific selection should be made according to actual requirements. Information carrier portions 5 of different functions such as the magnetic stripe 51, the anti-counterfeiting mark 53 and the signature strip 52 may be provided in different first slots K1, respectively, to avoid mutual interference.

For example, the first surface F1 is provided with at least two first slots K1 spaced apart from each other, at least two of the magnetic stripe 51, the anti-counterfeiting mark 53 and the signature strip 52 being respectively disposed in different ones of the first slots K1. Optionally, the first surface F1 is provided with three first slots K1, and the three first slots K1 are configured to receive the magnetic stripe 51, the anti-counterfeiting mark 53 and the signature strip 52, respectively.

Considering that the antenna unit 4 is embedded in the first rigid substrate 1, while edges of the slots in the rigid substrate are relatively sharp and are likely to cause damage to the antenna unit 4, to avoid the aforementioned problems, in some optional embodiments, the antenna unit 4 comprises a flexible antenna or an enameled wire wound antenna.

The flexible antenna may use a PI (Polyimide) substrate, which has high toughness and temperature resistance, and the PI substrate can be made sufficiently thin, which is more conducive to embedding within the first rigid substrate 1. The special characteristics of the flexible antenna material essentially eliminate the possibility of the lead wires being worn off, thereby reducing the likelihood of wire breakage during the production process.

Ceramic material is a special material with high hardness and high temperature resistance. Consequently, conventional card graphic printing methods are not suitable for processing on surfaces of ceramic cards. In some optional embodiments, the smart card further includes a pattern layer 7. The pattern layer 7 is disposed on the first surface F1 and/or on a surface of the second rigid substrate 2 that faces away from the first rigid substrate 1, and the pattern layer 7 is formed by one of screen printing, electroplating, color firing, and photolithography.

The photolithography may be laser etching, which is ablation of the surface of the ceramic card by high-energy laser.

Optionally, the smart card further includes an anti-fingerprint layer disposed on a side of the first surface F1 and/or on a side of a surface of the second rigid substrate 2 that faces away from the first rigid substrate 1.

After the graphic processing of the smart card is completed, the anti-fingerprint layer may be sprayed on the side of the first surface F1 and/or on the side of the surface of the second rigid substrate 2 that faces away from the first rigid substrate 1. The anti-fingerprint layer can not only prevent fingerprint accumulation to a certain extent, but can also protect graphics on the surface of the smart card. The anti-fingerprint layer is generally a transparent coating, which does not affect the texture and color of the existing patterns.

The smart card provided in the embodiments of the present application may be used to implement an electronic transaction function. The smart card is a type of card having a predetermined length, width, and thickness, and also possesses portability and ease of use. The smart card may be a financial card, a credit card, a stored-value card, a bus card, an access control card, or a membership card, but is not limited to the card types listed above.

The above description is merely specific implementations of the present application, but is not intended to limit the scope of protection of the present application. Various equivalent modifications or substitutions within the technical scope disclosed in the present application that are readily conceivable to those skilled in the art shall fall within the scope of protection of the present application. Therefore, the scope of protection of the present application shall be subject to the scope of protection of the claims.

## Claims

1. A smart card, **characterized by** comprising:
a first rigid substrate, which comprises a first surface and a second surface opposite each other, the first surface being provided with a first slot;
a second rigid substrate, which is disposed on a side of the second surface of the first rigid substrate, wherein the second surface, or a surface of the second rigid substrate that faces the first rigid substrate is provided with a second slot, and
when the second slot is disposed in the second surface, the first slot and the second slot do not overlap in a thickness direction of the smart card;
an information carrier portion, which is disposed in the first slot; and
an antenna unit, which is disposed in the second slot.

2. The smart card according to claim 1, **characterized by** further comprising a chip, wherein the chip is electrically connected to the antenna unit and at least partially disposed in the second slot.

3. The smart card according to claim 1, **characterized in that** the second rigid substrate further comprises a third slot penetrating the second rigid substrate; and
the smart card further comprises a chip module at least partially disposed in the third slot, the chip module being electrically connected to the antenna unit.

4. The smart card according to claim 3, **characterized in that** the second surface is further provided with a fourth slot, the fourth slot being in communication with the third slot to receive part of the chip module.

5. The smart card according to claim 4, **characterized in that** the chip module comprises a carrier-strip and a chip connected to each other, and an encapsulant disposed on a side of the chip facing away from the carrier-strip; and
the carrier-strip and the chip are at least partially disposed in the third slot, and the encapsulant is disposed in the fourth slot.

6. The smart card according to claim 5, **characterized in that** a depth of the third slot is greater than a thickness of the carrier-strip in the thickness direction of the smart card.

7. The smart card according to claim 1, **characterized by** further comprising an adhesive layer disposed between the first rigid substrate and the second rigid substrate to bond the first rigid substrate and the second rigid substrate.

8. The smart card according to claim 1, **characterized in that** the information carrier portion comprises at least one of a magnetic stripe, an anti-counterfeiting mark, and a signature strip.

9. The smart card according to claim 8, **characterized in that** the first surface is provided with at least two first slots spaced apart from each other, at least two of the magnetic stripe, the anti-counterfeiting mark and the signature strip being respectively disposed in different ones of the first slots.

10. The smart card according to claim 1, **characterized in that** an orthographic projection pattern of the antenna unit on the first rigid substrate matches an orthographic projection pattern of the second slot on the first rigid substrate.

11. The smart card according to claim 3, **characterized in that** the antenna unit comprises a first annular portion, and a second annular portion connected to an outer peripheral side of the first annular portion, the second annular portion being electrically connected to the chip module; or
the antenna unit comprises a first annular portion, and a second annular portion connected to an inner peripheral side of the first annular portion, the second annular portion being electrically connected to the chip module.

12. The smart card according to claim 1, **characterized in that** the antenna unit comprises a flexible antenna.

13. The smart card according to claim 1, **characterized by** further comprising a pattern layer disposed on the first surface and/or on a surface of the second rigid substrate that faces away from the first rigid substrate, the pattern layer being formed by one of screen printing, electroplating, color firing, and photolithography.

14. The smart card according to claim 1, **characterized by** further comprising an anti-fingerprint layer disposed on a side of the first surface and/or on a side of a surface of the second rigid substrate that faces away from the first rigid substrate.

15. The smart card according to claim 1, **characterized in that** the first rigid substrate and the second rigid substrate comprise a rigid material, which is ceramic or stone.

16. The smart card according to claim 15, **characterized in that** the rigid material is a sapphire material.
